# EUROPÄISCHE PATENTSCHRIFT

(11) **EP 0 531 960 B1**
(45) Veröffentlichungstag und Bekanntmachung des Hinweises auf die Patenterteilung: **31.01.1996**
(21) Anmeldenummer: 92115389.6
(22) Anmeldetag: 09.09.1992
(51) Int. Cl.: B60Q 1/26

(54) **Mehrkammerleuchte**
Multi-chamber light
Feu multiple

(30) Priorität: 12.09.1991 DE 9111339 U
(43) Veröffentlichungstag der Anmeldung: 17.03.1993
(73) Patentinhaber: Hella KG Hueck & Co., D-59552 Lippstadt (DE)
(72) Erfinder: Leinwand, Peter, W-4600 Dortmund 14 (DE)

(56) Entgegenhaltungen:
- DE-C- 3 305 218
- DE-U- 9 002 245
- DE-U- 9 014 203

## Beschreibung

Die Erfindung betrifft eine Mehrkammerleuchte, aus deren einzelnen Kammern Licht unterschiedlicher Signalfunktionen ausfällt, wie z. B.: Schlußlicht, Bremslicht, Blinklicht, Rückstrahler, Nebelschlußlicht, deren Kammern durch eine in der stilistischen Struktur gleiche Lichtscheibe abgedeckt sind, und deren sich über die gesamte Breite der Lichtscheibe erstreckende Struktur eine zeilen- oder spaltenförmige Gliederung aufweist, wobei die Zeilen oder Spalten in dem Lichtscheibenteil für die Nebelschlußl euchte zueinander wechseln mit Rückstrahlertripeln und mit optischen Streuelementen besetzten Zeilen oder Spalten, und die Rückstrahlertripel und optischen Streuelemente auf der Innenseite der Lichtscheibe angeordnet sind, und eine transparente Optikscheibe in Lichtaustrittsrichtung zumindest dem Abschnitt der Lichtscheibe für die Nebelschlußleuchte vorgelagert ist, die in den den Rückstrahlertripeln vorgelagerten Bereichen zeilen- oder spaltenförmig verlaufende Prismen aufweist.

Mit der DE-PS 33 05 218 ist eine Mehrkammerleuchte bekannt, bei deren Lichtscheibe im Bereich der Nebelschlußleuchte sich Zeilen aus Rückstrahlertripeln abwechseln mit Zeilen aus rechteckigen tonnenförmigen Streuelementen, die in ihrer Zeilenhöhe gleiche Abmessungen aufweisen. Diese Höhenabmessungen der Zeilen setzen sich fort über die Lichtscheibenabschnitte der benachbarten Kammern und sollen bei einer zeilenmäßig angestrebten Struktur der Optiken eine genügende Lichtausbeute ermöglichen, die im Bereich beispielsweise der Nebelschlußleuchte durch eine vorgeschaltete Optikscheibe unterstützt wird, wobei das Licht auf die entsprechenden tonnenförmigen Streuelemente projiziert wird. Damit das aus der Lichtquelle ausfallende parallelgerichtete Licht nicht auf die fremdlichtreflektierenden Rückstrahler fällt und sich dort in mehrere Lichtpunkte mit großer Lichtstärke aufteilt, die so groß sind, daß der nachfolgende Verkehr geblendet wird, sind in der Optikscheibe fluchtend dazu Zeilen mit Umlenkprismen vorgesehen, die das Licht ins Innere der Leuchte streuen und somit für den ursprünglichen Zweck der Ausleuchtung verlorengehen.

Aufgabe der Erfindung ist es deshalb, die im Gattungsbegriff aufgeführte Mehrkammerleuchte so auszubilden, daß die über die gesamte Leuchte zeilen- oder spaltenweise wechselnde Streuoptik und Rückstrahleroptik im Bereich mindestens der Leuchtenkammer für die Nebelschlußleuchte soviel Licht abgibt, daß die vom Gesetzgeber für Horizontal- und Vertikalstreuung geforderten Werte erreicht werden, wobei durch die Rückstrahlertripel zumindest im Bereich der Nebelschlußleuchte keine Lichtverluste auftreten und die Leuchte auch im ausgeschalteten Zustand für den Betrachter ein in ihrer stilistischen Struktur homogenes Bild bietet.

Diese Aufgabe wird erfindungsgemäß durch folgende Merkmale gelöst:
- die mit Rückstrahlertripeln besetzten Zeilen erstrecken sich über die gesamte Breite der Lichtscheibe,
- die optischen Streuelemente sind in der Lichtscheibe als konkave Toruslinsen ausgebildet, denen Bereiche ohne optische Ablenkwirkung in der Optikscheibe vorgelagert sind,
- die Prismen der Optikscheibe sind als Doppelprismen ausgebildet und durch Einbringen einer im Querschnitt V-förmigen Nut erstellt,
- der Winkel der V-förmigen Nut so gewählt ist, daß das davon abgelenkte Licht in den Randbereich auf die Toruslinsen geleitet wird und in einem solchen Winkel auftrifft, daß das auftreffende Licht durch die Toruslinsen bevorzugt in 0°-Richtung abgelenkt wird, wobei die 0°-Richtung der Richtung der parallelen Lichtbündel (10, 11) entspricht.

Durch diese Anordnung ist gewährleistet, daß das gesamte Licht, was die Optikscheibe passiert, auch zur Abstrahlung auf die Lichtscheibe fällt ohne eventuelle Streuverluste durch die Rückstrahlertripel. Außerdem wirken die konkaven Toruslinsen beim Anblick von außen verkleinernd auf die Struktur der dahinter angeordneten Optikscheibe, so daß eventuelle, die stilistische Struktur der gesamten Lichtscheibe negativ beeinflussenden Linien bzw. Kanten so klein und unscheinbar werden, daß ihre visuelle Wirkung auf den Betrachter unbedeutend ist und dabei den harmonischen Gesamteindruck nicht beeinträchtigen kann.

In einer vorteilhaften Ausführung der Erfindung wird das auf die Prismen auftreffende Licht zu einem Teil auf die in Abstrahlrichtung darüberliegende Zeile der Toruslinsen und zum anderen Teil auf die darunterliegende Zeile der Toruslinsen geleitet. Dadurch werden gerade für eine Nebelschlußleuchte in ihrer vertikalen Mittelebene die Abstrahlwerte nach oben und unten in einer vorbestimmten Lichtstärke erreicht, ohne daß zusätzliche Optiken eingesetzt werden müssen.

In einer anderen vorteilhaften Ausführung ist es möglich, zusätzlich zu dem Reflektor auf der der Glühlampe zugewandten Seite der Optikscheibe eine Fresneloptik zur Aufrichtung des direkt von der Glühlampe abgestrahlten Lichtes anzuordnen. Diese trägt dann dazu bei, zusätzlich ausgerichtete Lichtbündel für die in der Lichtscheibe erwünschte Lichtcharakteristik der Nebelschlußleuchte zur Verfügung zu stellen.

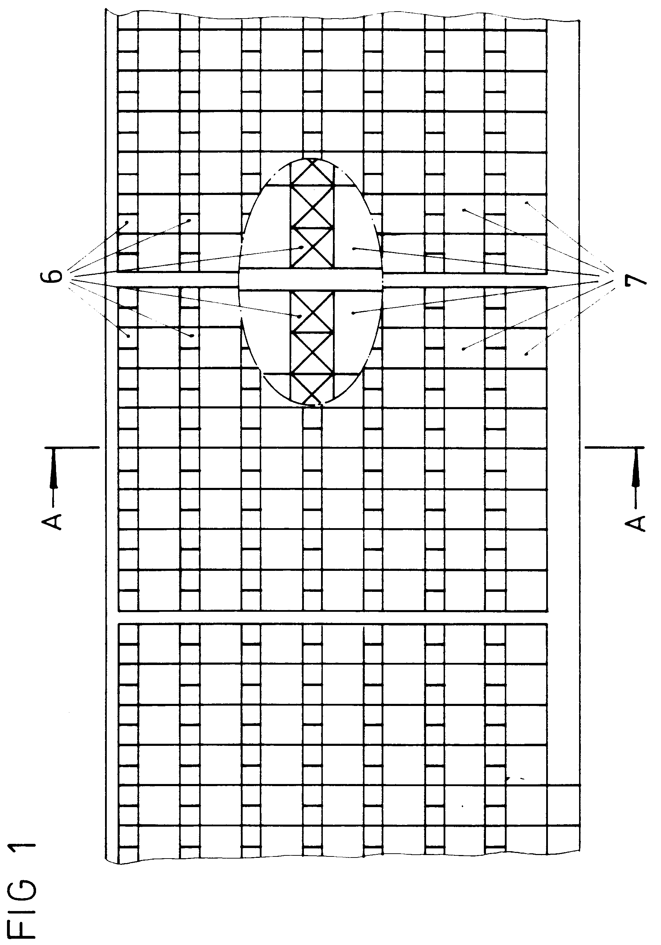

Die Erfindung ist in der Zeichnung dargestellt, und zwar zeigt
Figur 1 die Vorderansicht der Lichtscheibe einer Mehrkammerleuchte, während

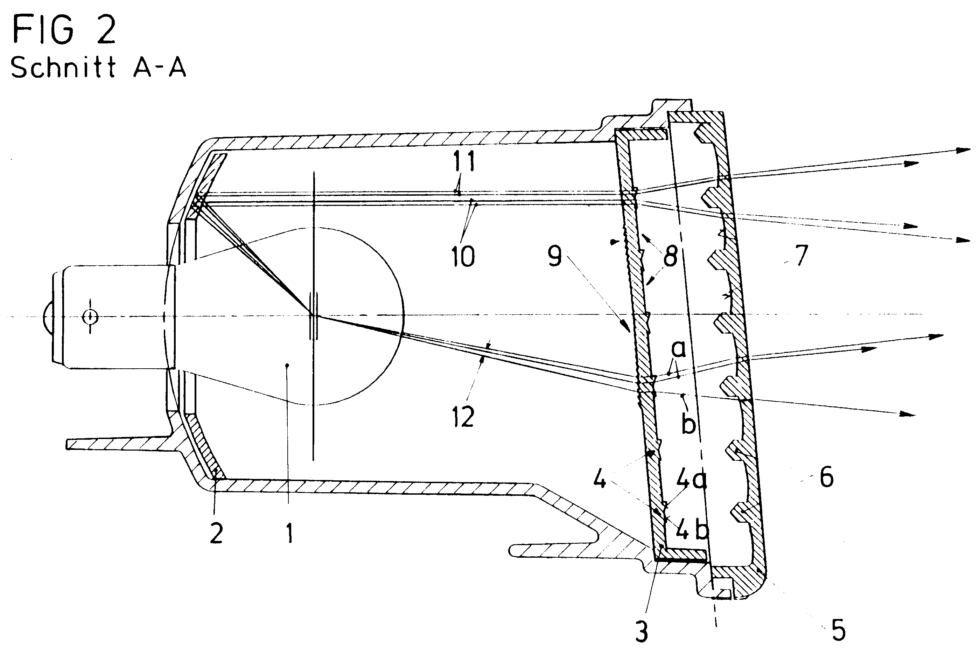

Figur 2 einen Schnitt gemaß der Linie A-A darstellt.

Eine Glühlampe (1) ist mit einem das Licht parallelrichtenden Reflektor (2) hinterlegt. In Lichtaustrittsrichtung hinter dem Reflektor ist eine Optikscheibe (3) angeordnet, welche zeilenweise sich abwechselnde Doppelprismen (4) und Bereiche (8) ohne optische Ablenkwirkung aufweist. In Lichtaustrittsrichtung hinter der Optikscheibe ist eine Lichtscheibe (5) angeordnet, die in Höhe der Zeilen mit Doppelprismen (4) fremdlichtreflektierende Rückstrahler (6) in Zeilen aufweist, welche sich wiederum abwechseln mit Zeilen von konkaven Toruslinsen (7), die in Höhe der Zeilen der Optikscheibe (3) verlaufen, die mit Bereichen (8) ohne optische Ablenkwirkung korrespondieren. Auf der der Glühlampe zugewandten Seite der Optikscheibe (3) befindet sich zusätzlich zum Reflektor (2) eine Fresneloptik (9) zur Strahlaufrichtung des direkt von der Glühlampe abgestrahlten Lichtes. Der Durchmesser der Fresneloptik (9) entspricht in etwa dem Durchmesser der Glühlampe (1). Beim Auftreffen der parallelen Lichtbündel auf die Optikscheibe (3) werden diese in von optischer Ablenkwirkung freien Bereichen (8) parallel auf die Lichtscheibe weitergeleitet und dort von den Toruslinsen (7) in der entsprechenden Horizontal- und Vertikalstreuung nach außen abgegeben. Die parallelen Lichtbündel (10, 11), die jedoch auf die Doppelprismen (4) fallen, werden gemäß dem Winkel des Doppelprismas (4) geteilt bzw. aufgeweitet, um so an den fremdlichtreflektierenden Rückstrahlern (6) vorbei auf die Randbereiche der Toruslinse (7) gerichtet zu werden. Mit (12) ist ein Lichtbündel bezeichnet, welches direkt von der Glühlampe (1) auf die Optikscheibe (3) und auf die Fresneloptik (9) fällt. Ein Teil des Lichtbündels wird so aufgerichtet, daß er über eine Seite (4a) des Doppelprismas mit dem Teil (a) auf eine obere Toruslinse (7) geleitet wird. Über die andere Seite (4b) des Doppelprismas gelangt ein Restteil (b) des Lichtbündels (12) auf eine darunter angeordnete Toruslinse (7). Abschließend läßt sich sagen, daß alle Lichtbündel (10, 11, 12), die über die Doppelprismen (4) zum Austritt aus der Leuchte gelangen, mehr oder weniger ihren Anteil an der Vertikalstreuung des Lichtes haben und somit den nach ECE-Regelung vorgeschriebenen Anteil von +5° nach oben und -5° nach unten bei einer Mindestlichtstärke von 150 cd erfüllen helfen.

### Bezugszeichen

### Mehrkammerleuchte

- (1): Glühlampe
- (2): Reflektor
- (3): Optikscheibe
- (4): Doppelprismen
- (4a, 4b): Seiten der Doppelprismen
- (5): Lichtscheibe
- (6): Rückstrahler
- (7): Toruslinsen
- (8): Bereiche
- (9): Fresneloptik
- (10, 11, 12): Lichtbündel
- (a, b): Teil

## Patentansprüche

1. Mehrkammerleuchte für Kraftfahrzeuge mit folgenden Merkmalen:
- aus den einzelnen Kammern fällt Licht unterschiedlicher Signalfunktionen aus, wie z. B.: Schlußlicht, Bremslicht, Blinklicht, Rückstrahler, Nebelschlußlicht,
- alle Kammern sind durch eine in der stilistischen Struktur gleiche Lichtscheibe (5) abgedeckt,
- die sich über die gesamte Breite der Lichtscheibe (5) erstreckende Struktur weist eine zeilen- oder spaltenförmige Gliederung auf,
- die Zeilen oder Spalten in dem Lichtscheibenteil für die Nebelschlußleuchte wechseln zueinander mit Rückstrahlertripeln (6) und mit optischen Streuelementen (7) besetzten Zeilen oder Spalten,
- die Rückstrahlertripel (6) und optischen Streuelemente (7) sind auf der Innenseite der Lichtscheibe angeordnet,
- eine transparente Optikscheibe (3) ist in Lichtaustrittsrichtung zumindest dem Abschnitt der Lichtscheibe (5) für die Nebelschlußleuchte vorgelagert,
- die Optikscheibe (3) weist in den den Rückstrahlertripeln (6) vorgelagerten Bereichen zeilenförmig oder spaltenförmig verlaufende Prismen (4a, 4b) auf,
dadurch gekennzeichnet, daß
a) die mit Rückstrahlertripeln (6) besetzten Zeilen sich über die gesamte Breite der Lichtscheibe (5) erstrecken,
b) die optischen Streuelemente in der Lichtscheibe (5) als konkave Toruslinsen (7) ausgebildet sind, denen Bereiche (8) ohne optische Ablenkwirkung in der Optikscheibe (3) vorgelagert sind,
c) die Prismen der Optikscheibe (3) als Doppelprismen (4) ausgebildet sind und durch Einbringen einer im Querschnitt V-förmigen Nut erstellt sind,
d) der Winkel der V-förmigen Nut so gewählt ist, daß das davon abgelenkte Licht in den Randbereich auf die Toruslinsen (7) geleitet wird und in einem solchen Winkel auftrifft, daß das auftreffende Licht durch die Toruslinsen (7) bevorzugt in 0°-Richtung abgelenkt wird, wobei die 0°-Richtung der Richtung der parallelen Lichtbündel (10, 11) entspricht.

2. Mehrkammer leuchte nach Anspruch 1, dadurch gekennzeichnet, daß das auf die Doppelprismen (4) auftreffende Licht von dem einen Teil (4a) auf die in Abstrahlrichtung darüberliegende Zeile der Toruslinsen (7) und von dem anderen Teil (4b) auf die darunterliegende Zeile der Toruslinsen (7) abgeleitet wird.

3. Mehrkammerleuchte nach Anspruch 1, dadurch gekennzeichnet, daß auf der der Glühlampe (1) zugewandten Seite der Optikscheibe (3) eine Fresneloptik (9) zur Aufrichtung des direkt von der Glühlampe (1) abgestrahlten Lichtes angeordnet ist.

## Claims

1. A multichamber lamp for motor vehicles, having the following features:
- light of different signal functions, such as the rear light, brake light, flashing indicator light, reflector, rear fog light, emerges from the individual chambers,
- all the chambers are covered by a lens cover (5) which is homogeneous in its stylistic structure,
- the structure which extends over the entire width of the cover lens (5) comprises an arrangement in the form of rows or columns,
- the rows or columns in the part of the cover lens for the rear fog lamp alternate with reflecting triple prisms (6) and with rows or columns occupied by optical dispersion elements (7),
- the reflecting triple prisms (6) and optical dispersion elements (7) are disposed on the inside of the cover lens,
- in the direction of light emergence, a transparent lens plate (3) is mounted at least in front of the section of the cover lens (5) for the rear fog lamp,
- in its regions mounted in front of the reflecting triple prisms (6), the lens plate (3) has prisms (4a, 4b) which extend in the form of rows or columns,
characterised in that
a) the rows occupied by reflecting triple prisms (6) extend over the entire width of the cover lens (5),
b) the optical dispersion elements in the cover lens (5) are constructed as concave toroidal lenses (7), in front of which there are mounted regions (8) in the lens plate (3) without an optical deflection effect,
c) the prisms of the lens plate (3) are constructed as double prisms (4) and are produced by introducing a channel which is V-shaped in cross-section,
d) the angle of the V-shaped channel is selected so that the light deflected by it is guided on to the edge regions of the toroidal lenses (7) and impinges at an angle such that the incident light is deflected by the toroidal lenses (7) in the 0° direction, wherein the 0° direction corresponds to the direction of the parallel light beam (10, 11).

2. A multichamber lamp according to claim 1, characterised in that the light which impinges on the double prisms (4) is deflected by one part (4a) on to the row of toroidal lenses (7) situated above the double prisms in the direction of radiation and by the other part (4b) on to the row of toroidal lenses (7) situated below the double prisms.

3. A multichamber lamp according to claim 1, characterised in that a Fresnel lens (9) for aligning the light radiated directly from the incandescent filament bulb (1) is disposed on the side of the lens plate (3) facing the incandescent filament bulb (1).

## Revendications

1. Feu à plusieurs compartiments pour véhicules automobiles, présentant les particularités suivantes:
- de la lumière de fonctions de signalisation différentes émerge des divers compartiments, ayant par exemple la fonction de feu rouge arrière, feu de stop, feu clignotant, catadioptre et/ou feu de brouillard arrière,
- tous les compartiments sont couverts par une glace de diffusion (5) d'une même structure stylistique,
- la structure, s'étendant sur toute la largeur de la glace (5), présente une division en lignes ou en colonnes,
- les lignes ou les colonnes dans la partie de glace destinée au feu de brouillard arrière alternent avec des lignes ou des colonnes garnies de trièdres rétroréflecteurs ou catadioptres (6) et d'éléments optiques de diffusion (7),
- les catadioptres (6) et les éléments optiques de diffusion (7) sont agencés sur la face interne de la glace,
- une lame optique transparente (3) est placée au moins devant la partie de la glace (5) destinée au feu de brouillard arrière, dans la direction de sortie de la lumière, et
- la lame optique (3) présente des prismes (4a, 4b) s'étendant en forme de lignes ou de colonnes dans les zones placées devant les catadioptres (6);
caractérisé en ce que
a) les lignes garnies de catadioptres (6) s'étendent sur toute la largeur de la glace de diffusion (5),
b) les eléments optiques de diffusion de la glace (5) sont réalisés comme des lentilles toriques concaves (7), devant lesquelles sont placées, dans la lame optique (3), des zones (8) n'ayant pas d'effet optique de déviation,
c) les prismes de la lame optique (3) sont réalisés comme des prismes doubles (4) créés par la formation dans la lame d'une rainure ayant une section droite en V, et
d) l'angle de la rainure en V est choisi de manière que la lumière déviée par elle soit dirigée dans la zone du bord des lentilles toriques (7) et tombe dans cette zone sous un angle tel que les lentilles toriques (7) dévient la lumière incidente préférentiellement dans la direction de 0°, laquelle correspond à la direction des faisceaux lumineux parallèles (10, 11).

2. Feu à plusieurs compartiments selon la revendication 1, caractérisé en ce que les prismes doubles (4) dévient une partie (4a) de la lumière incidente sur la ligne de lentilles toriques (7) située au-dessus d'eux, dans la direction d'émission, et dévient l'autre partie (4b) sur la ligne sous-jacente de lentilles toriques (7).

3. Feu à plusieurs compartiments selon la revendication 1, caractérisé en ce qu'une optique de Fresnel (9) pour le redressement de la lumière émise directement par la lampe à incandescence (1) est agencée sur la face de la lame optique (3) dirigée vers la lampe à incandescence (1).
